(19) Europäisches Patentamt
European Patent Office
Office européen des brevets

(11) **EP 2 398 666 B1**

(12) **FASCICULE DE BREVET EUROPEEN**

(45) Date de publication et mention de la délivrance du brevet:
**18.10.2017 Bulletin 2017/42**

(21) Numéro de dépôt: **10708335.4**

(22) Date de dépôt: **11.02.2010**

(51) Int Cl.:
***B60K 23/08*** (2006.01)

(86) Numéro de dépôt international:
**PCT/FR2010/050238**

(87) Numéro de publication internationale:
**WO 2010/094877 (26.08.2010 Gazette 2010/34)**

(54) **PROCEDE DE COMMANDE D'UNE DIFFERENCE DE VITESSE ENTRE ROUES AVANT ET ARRIERE D'UN VEHICULE A QUATRE ROUES MOTRICES**

VERFAHREN ZUR STEUERUNG EINER DREHZAHLDIFFERENZ ZWISCHEN DEN VORDERRÄDERN UND DEN HINTERRÄDERN EINES FAHRZEUGS MIT VIERRADANTRIEB

METHOD FOR CONTROLLING A SPEED DIFFERENCE BETWEEN THE FRONT WHEELS AND REAR WHEELS OF A FOUR-WHEEL DRIVE VEHICLE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.02.2009 FR 0951101**

(43) Date de publication de la demande:
**28.12.2011 Bulletin 2011/52**

(73) Titulaire: **Renault S.A.S.**
**78288 Guyancourt Cedex (FR)**

(72) Inventeurs:
• **FOUSSARD, François**
**F-76100 Rouen (FR)**
• **MONTI, Alessandro**
**F-92250 La Garenne Colombes (FR)**
• **POTHIN, Richard**
**F-78760 Jouars-Pontchartrain (FR)**
• **ROMANI, Nicolas**
**F-75016 Paris (FR)**
• **SAINT-LOUP, Philippe**
**F-78760 Jouars-Pontchartrain (FR)**

(56) Documents cités:
**EP-A- 1 403 124       DE-A1- 3 904 920**
**DE-T5-112006 001 862    US-A- 5 461 568**

EP 2 398 666 B1

**Description**

La présente invention concerne un procédé de commande d'une différence de vitesse entre roues avant et arrière d'un véhicule automobile à quatre roues motrices. Elle concerne également un dispositif permettant de mettre en oeuvre le procédé.

Dans le cas des véhicules automobiles à quatre roues motrices, il est particulièrement intéressant de pouvoir asservir la vitesse d'un train du véhicule par rapport à la vitesse de l'autre train. L'écart souhaité entre la vitesse des roues du train avant et la vitesse des roues du train arrière peut être différent suivant les conditions de roulage du véhicule.

Par exemple, lors du démarrage d'un véhicule à moteur à base traction, pour de faibles vitesses, il peut se produire de fortes accélérations, si bien que l'on peut privilégier un glissement faible entre les roues avant et les roues arrière pour augmenter la motricité. Au contraire, pour des vitesses élevées, on tolérera un écart plus important entre le train avant et le train arrière pour privilégier la stabilité.

On connaît du document US 5,752,211 un procédé qui améliore le glissement lors de phases de roulage quasi-statique en modifiant la commande de distribution de couple entre le train avant et le train arrière. Cette modification est réalisée en réintroduisant des signaux dans le système de régulation de l'actionneur. Ce document divulgue un procédé de commande d'une différence de vitesse entre la vitesse des roues d'un train avant et la vitesse des roues d'un train arrière d'un véhicule automobile à quatre roues motrices, selon lequel une consigne initiale de différence de vitesse déterminée en fonction de la vitesse du véhicule est modulée en fonction d'une consigne intermédiaire de différence de vitesse, de manière à obtenir une consigne finale de différence de vitesse, qui est comparée avec la différence de vitesse mesurée afin de réguler la différence de vitesse, de manière à ce que la différence de vitesse mesurée atteigne la valeur de consigne finale de différence de vitesse. Toutefois, du fait de la modification de la boucle de régulation, la stabilité du véhicule n'est pas garantie avec ce type de procédé.

La présente invention a pour objectif de remédier à ces inconvénients.

L'invention propose un procédé de commande d'une différence de vitesse entre le train avant et le train arrière d'un véhicule à quatre roues motrices, selon la revendication 1. L'invention a ainsi pour objet un procédé de commande d'une différence de vitesse entre la vitesse des roues d'un train avant et la vitesse des roues d'un train arrière d'un véhicule automobile à quatre roues motrices.

Ainsi, la consigne de différence de vitesse est modulée en amont du système de régulation, ce qui permet de ne pas modifier le système de régulation.

La modulation de la consigne initiale de différence de vitesse ($C_{initiale}$) est réalisée par modulations successives en fonction de chaque consigne intermédiaire de différence de vitesse.

Les paramètres de fonctionnement du véhicule sont la température d'embrayage, le rayon de braquage et la différence de rayon des roues entre le train avant et le train arrière.

D'autres paramètres envisageables peuvent être la vitesse de lacet, l'état de la route, un indicateur de régulation ABS (Antiblockiersystem en langue allemande), un indicateur de régulation ESP (Electronic Stability Program en langue anglaise), ou encore une position de la pédale d'accélérateur.

La consigne finale de différence de vitesse est avantageusement filtrée avant d'être comparée à la différence de vitesse mesurée.

L'invention a également pour objet un dispositif de commande d'une différence de vitesse entre un train avant et un train arrière d'un véhicule automobile à quatre roues motrices, selon la revendication 3. Le dispositif peut comprendre en outre des moyens de filtrage de la consigne finale de différence de vitesse, comme indiqué ci-dessus.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre schématiquement la détermination d'une consigne de différence de vitesse, conformément à un procédé selon l'invention, et
- la figure 2 illustre schématiquement la régulation de la différence de vitesse, conformément au procédé.

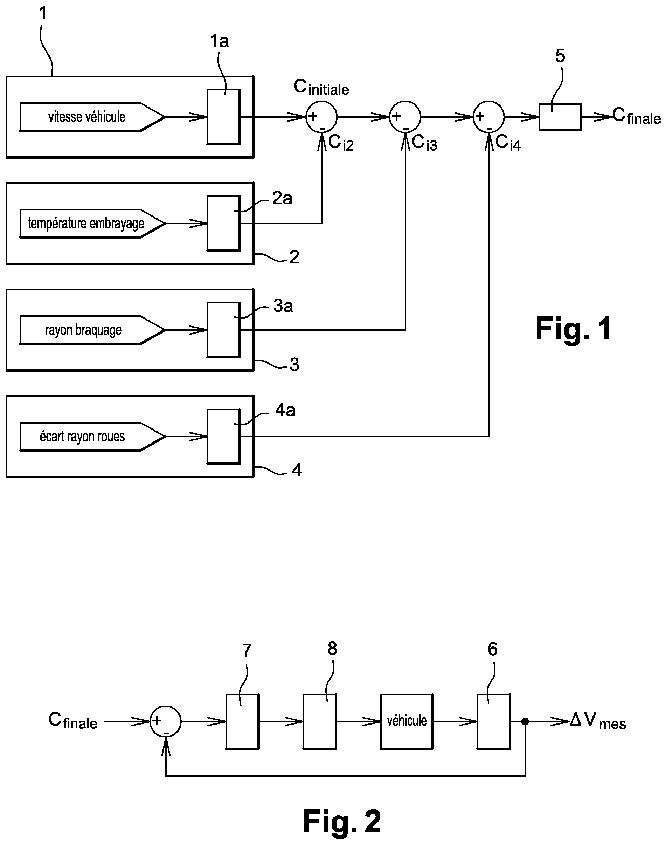

Tel qu'illustré sur les figures 1 et 2, le fonctionnement du procédé peut être décrit en référence à plusieurs blocs. Un dispositif de mise en oeuvre du procédé peut ainsi comprendre un bloc initial 1, un ou plusieurs blocs intermédiaires 2,3,4, un bloc de filtrage de signal 5, un bloc de mesure 6, un bloc de régulation 7, et un bloc actionneur 8.

Le bloc 1, dit bloc initial, permet de déterminer une consigne initiale de différence de vitesse $C_{initiale}$ entre la vitesse des roues d'un train avant et la vitesse des roues d'un train arrière d'un véhicule automobile, en fonction de la vitesse du véhicule. La vitesse du véhicule peut par exemple être calculée à partir de quatre capteurs de vitesse aptes à mesurer la vitesse des quatre roues du véhicule. Dans le cas d'un véhicule principalement à traction, on peut également calculer la vitesse en faisant la moyenne des vitesses des roues arrière.

La consigne initiale de différence de vitesse $C_{initiale}$ peut être obtenue à partir d'une cartographie 1a répertoriant des valeurs de consigne d'écart de vitesse en fonction de la vitesse du véhicule.

Les blocs intermédiaires 2,3,4 permettent la détermination de consignes de différence de vitesse intermédiaires qui sont chacune fonction d'un paramètre de fonctionnement du véhicule.

Le bloc intermédiaire 2 permet l'obtention d'une consigne intermédiaire de différence de vitesse $c_{i2}$ en fonction de la température de l'embrayage piloté. La température de l'embrayage a tendance à augmenter quand les trains ne sont pas à la même vitesse et que l'embrayage transfère du couple. La température de l'embrayage peut être estimée à partir de la requête de couple et de l'écart de vitesse entre l'entrée et la sortie de l'embrayage piloté.

La consigne intermédiaire $c_{i2}$, qui est fonction de la température de l'embrayage peut être obtenue à partir d'une cartographie 2a répertoriant des valeurs de consigne d'écart de vitesse en fonction de la température de l'embrayage.

La consigne initiale de différence de vitesse $C_{initiale}$ déterminée par le bloc initial 1 est alors modulée en fonction de la consigne de différence de vitesse $c_{i2}$ fonction de la température d'embrayage qui a été déterminée par le bloc intermédiaire 2. En effet, si la température de l'embrayage est élevée, on autorisera par exemple une faible différence de vitesse, car on ne souhaite pas de patinage qui pourrait conduire à une élévation de température endommageant l'embrayage.

Le bloc intermédiaire 3 permet l'obtention d'une consigne intermédiaire de différence de vitesse $c_{i3}$ en fonction du rayon de braquage. La consigne intermédiaire $c_{i3}$, qui est fonction du rayon de braquage, peut être obtenue à partir d'une cartographie 3a répertoriant des valeurs de consigne d'écart de vitesse en fonction du rayon de braquage.

Le rayon de braquage peut être estimé à l'aide des relations suivantes :

$$\dot{\psi} = \frac{V}{R} = \frac{Vrr}{Rrr} = \frac{Vrl}{Rrl}$$

$$Rrr = R + \frac{e}{2}$$

$$Rrl = R - \frac{e}{2}$$

D'où

$$R = \frac{e}{2}\frac{(Vrr+Vrl)}{(Vrr-Vrl)}$$

où $\dot{\psi}$ est la vitesse de lacet, $V$ est la vitesse véhicule, $Vrl$ est la vitesse roue arrière gauche, $Vrr$ est la vitesse roue arrière droite, $R$ est le rayon de braquage véhicule, $Rrl$ est le rayon de braquage de la roue arrière gauche, $Rrr$ est le rayon de braquage de la roue arrière droite et $e$ est la voie.

Le paramètre de fonctionnement du véhicule utilisé dans le bloc intermédiaire 3 pourrait également être l'accélération latérale, la vitesse de lacet ou l'angle du volant. Dans ce cas, la consigne intermédiaire $c_{i3}$, qui serait fonction de ces paramètres, pourrait également être obtenue à partir d'une cartographie 3a répertoriant des valeurs de consigne d'écart de vitesse en fonction de ces paramètres.

La consigne de différence de vitesse, déjà modulée par la consigne intermédiaire $c_{i2}$ du bloc intermédiaire 2, est alors modulée par la consigne intermédiaire $c_{i3}$ du bloc intermédiaire 3.

Le bloc intermédiaire 4 permet l'obtention d'une consigne intermédiaire de différence de vitesse $c_{i4}$ en fonction des écarts de rayon des roues. La consigne intermédiaire $c_{i4}$ fonction des écarts de rayon de roues peut être obtenue à partir d'une cartographie 4a répertoriant des valeurs de consigne d'écart de vitesse en fonction d'écarts de rayon de roues.

La consigne de différence de vitesse, déjà modulée par les consignes intermédiaires $c_{i2}$ et $c_{i3}$ des blocs intermédiaires 2 et 3, est alors modulée par la consigne intermédiaire $c_{i4}$ du bloc intermédiaire 4. Si par exemple le pneu d'une roue avant est dégonflé, le rayon de la roue est plus petit et sa vitesse est donc supérieure. Grâce au bloc intermédiaire 4, on est capable de détecter le rayon de la roue le plus petit, et on est capable de moduler la consigne de différence de vitesse en autorisant une différence de vitesse plus importante.

A l'issue de la modulation apportée par le bloc intermédiaire 4, on obtient une consigne finale de différence de vitesse $C_{finale}$. Cette consigne $C_{finale}$ a ainsi été obtenue par modulations successives de la consigne initiale de différence de vitesse $C_{initiale}$. Les modulations peuvent par exemple consister en des soustractions successives des valeurs intermédiaires de consignes de différence de vitesse à la valeur de consigne de différence de vitesse. Dans le cas d'un véhicule à moteur à base traction, on pourra régler les modulations de sorte que la consigne soit toujours positive. Ainsi, si la différence entre la valeur initiale de consigne de différence de vitesse, modulée ou non, et une valeur intermédiaire de consigne est négative, on pourra fixer à 0 la valeur de consigne de différence de vitesse.

Inversement, dans le cas d'un véhicule à moteur à base propulsion, on pourra régler les modulations de sorte que la consigne soit toujours négative.

La consigne finale de différence de vitesse $C_{finale}$ peut également être obtenue, tel qu'illustré sur la figure 1, après filtrage par le bloc de filtrage 5 du résultat obtenu après modulation par les blocs intermédiaires 2,3,4. Le bloc de filtrage 5 a pour but de donner un degré de liberté supplémentaire à la mise au point de la dynamique de l'asservissement sans dégrader sa robustesse. La bande passante de ce filtre peut par exemple varier en fonction de la situation de conduite. A basse vitesse, on peut privilégier une arrivée rapide du couple pour favoriser la motricité, et à haute vitesse, on peut privilégier une arrivée plus progressive pour des raisons de stabilité.

Le bloc de mesure 6, tel qu'illustré sur la figure 2, permet de mesurer la différence de vitesse entre la vitesse des roues du train avant et la vitesse des roues du train arrière du véhicule. La vitesse des roues du train avant peut par exemple être la moyenne des vitesses des roues avant du véhicule, et la vitesse des roues du train arrière peut par exemple être la moyenne des vitesses des roues arrière du véhicule.

La différence de vitesse mesurée $\Delta V_{mes}$ est ensuite comparée à la consigne finale $C_{finale}$ de différence de vitesse. L'écart entre la variable observée $\Delta V_{mes}$ et la valeur de consigne $C_{finale}$ est alors corrigé par le bloc régulateur 7. Le bloc actionneur 8 va recevoir du bloc régulateur 7 une commande qui va être fonction de la valeur mesurée $AV_{mes}$ et de la valeur de consigne $C_{finale}$. Le bloc actionneur 8 va ainsi agir sur le véhicule de manière à répartir le couple moteur entre le train avant et le train arrière suivant cette commande.

Le procédé selon l'invention permet ainsi de moduler la consigne d'écart de vitesse en fonction de différents paramètres de fonctionnement du véhicule. On peut aisément ajouter ou enlever des blocs intermédiaires, ce qui permet une grande flexibilité lors de la conception. On agit seulement sur la consigne d'écart de vitesse, la boucle de régulation n'étant pas modifiée, ce qui permet de garantir la stabilité du véhicule.

## Revendications

**1.** Procédé de commande d'une différence de vitesse entre la vitesse des roues d'un train avant et la vitesse des roues d'un train arrière d'un véhicule automobile à quatre roues motrices, **caractérisé en ce qu'**il comprend les étapes suivantes :

- détermination d'une consigne initiale de différence de vitesse ($C_{initiale}$) en fonction de la vitesse du véhicule,
- détermination d'une première consigne intermédiaire de différence de vitesse ($c_{i2}$) en fonction de la température d'embrayage
- détermination d'une seconde consigne intermédiaire de différence de vitesse ($c_{i3}$) en fonction du rayon de braquage du véhicule,
- détermination d'une troisième consigne intermédiaire de différence de vitesse ($c_{i4}$) en fonction de la différence de rayon des roues entre le train avant et le train arrière, - modulation de la consigne initiale de différence de vitesse ($C_{initiale}$) en fonction desdites première, seconde et troisième consignes intermédiaires de différence de vitesse ($c_{i2}, c_{i3}, c_{i4}$), de manière à obtenir une consigne finale de différence de vitesse ($C_{finale}$),
- mesure de la vitesse des roues du train avant et du train arrière et détermination de la différence de vitesse des roues des deux trains,
- comparaison de la différence de vitesse mesurée ($\Delta V_{mes}$) avec la consigne finale de différence de vitesse ($C_{finale}$), et
- régulation de la différence de vitesse mesurée ($\Delta V_{mes}$), de manière à ce que la différence de vitesse mesurée ($\Delta V_{mes}$) atteigne la valeur de consigne finale de différence de vitesse ($C_{finale}$),

la modulation de la consigne initiale de différence de vitesse ($C_{initiale}$) étant réalisée par modulations successives en fonction de chaque consigne intermédiaire de différence de vitesse ($c_{i2}, c_{i3}, c_{i4}$).

**2.** Procédé selon la revendication 1, **caractérisé en ce que** la consigne finale de différence de vitesse ($C_{finale}$) est filtrée avant d'être comparée à la différence de vitesse mesurée ($\Delta V_{mes}$).

**3.** Dispositif de commande d'une différence de vitesse entre un train avant et un train arrière d'un véhicule automobile à quatre roues motrices, **caractérisé en ce qu'**il comprend :

- des moyens de détermination d'une consigne initiale de différence de vitesse ($C_{initiale}$) en fonction de la vitesse du véhicule,
- des moyens de détermination d'une première consigne intermédiaire de différence de vitesse ($c_{i2}$) en fonction de la température d'embrayage
- des moyens de détermination d'une seconde consigne intermédiaire de différence de vitesse ($c_{i3}$) en fonction du rayon de braquage du véhicule,
- des moyens de détermination d'une troisième consigne intermédiaire de différence de vitesse en fonction de la différence de rayon des roues entre le train avant et le train arrière,
- des moyens de modulation de la consigne initiale de différence de vitesse ($C_{initiale}$) en fonction desdites première, seconde et troisième consignes intermédiaires de différence de vitesse ($c_{i2}, c_{i3}, c_{i4}$), permettant l'obtention d'une consigne finale de différence de vitesse ($C_{finale}$),
- des moyens de mesure de la vitesse des roues du train avant et du train arrière et des moyens de détermination de la différence de vitesse de roues des deux trains
- des moyens de comparaison de la différence de vitesse mesurée ($\Delta V_{mes}$) avec la consigne finale de différence de vitesse ($C_{finale}$), et
- des moyens de régulation de la différence de vitesse mesurée ($\Delta V_{mes}$), permettant que la différence de vitesse mesurée ($\Delta V_{mes}$) atteigne la valeur de consigne finale de différence de vitesse ($C_{finale}$),
- ainsi que des moyens de modulations successives de la consigne initiale de différence de vi-

tesse ($C_{initiale}$) en fonction de chaque consigne intermédiaire de différence de vitesse ($c_{i2},c_{i3},c_{i4}$).

4. Dispositif selon la revendication 3, **caractérisé en ce qu'**il comprend en outre des moyens de filtrage de la consigne finale de différence de vitesse ($C_{finale}$).

**Patentansprüche**

1. Verfahren zur Steuerung einer Drehzahldifferenz zwischen der Drehzahl der Räder einer Vorderachse und der Drehzahl der Räder einer Hinterachse eines Kraftfahrzeugs mit Vierradantrieb, **dadurch gekennzeichnet, dass** es die folgenden Schritte umfasst:

- Bestimmung eines Anfangssollwertes der Drehzahldifferenz ($C_{initiale}$) in Abhängigkeit von der Geschwindigkeit des Fahrzeugs,
- Bestimmung eines ersten Zwischensollwertes der Drehzahldifferenz ($c_{i2}$) in Abhängigkeit von der Kupplungstemperatur,
- Bestimmung eines zweiten Zwischensollwertes der Drehzahldifferenz ($c_{i3}$) in Abhängigkeit von dem Wenderadius des Fahrzeugs,
- Bestimmung eines dritten Zwischensollwertes der Drehzahldifferenz ($c_{i4}$) in Abhängigkeit von der Radiusdifferenz der Räder zwischen der Vorderachse und der Hinterachse,
- Modulation des Anfangssollwertes der Drehzahldifferenz ($C_{initiale}$) in Abhängigkeit von dem ersten, zweiten und dritten Zwischensollwert der Drehzahldifferenz ($c_{i2}$, $c_{i3}$, $c_{i4}$), um einen Endsollwert der Drehzahldifferenz ($C_{finale}$) zu erhalten,
- Messung der Drehzahl der Räder der Vorderachse und der Hinterachse und Bestimmung der Drehzahldifferenz der Räder der beiden Achsen,
- Vergleich der gemessenen Drehzahldifferenz ($\Delta V_{mes}$) mit dem Endsollwert der Drehzahldifferenz ($C_{finale}$), und
- Regelung der gemessenen Drehzahldifferenz ($\Delta V_{mes}$), derart, dass die gemessene Drehzahldifferenz ($\Delta V_{mes}$) den Endsollwert der Drehzahldifferenz ($C_{finale}$) erreicht,

wobei die Modulation des Anfangssollwertes der Drehzahldifferenz ($C_{initiale}$) durch sukzessive Modulationen in Abhängigkeit von den einzelnen Zwischensollwerten der Drehzahldifferenz ($c_{i2}$, $c_{i3}$, $c_{i4}$) durchgeführt wird.

2. Verfahren nach Anspruch 1, **dadurch gekennzeichnet, dass** der Endsollwert der Drehzahldifferenz ($C_{finale}$) gefiltert wird, bevor er mit der gemessenen Drehzahldifferenz ($\Delta V_{mes}$) verglichen wird.

3. Vorrichtung zur Steuerung einer Drehzahldifferenz zwischen einer Vorderachse und einer Hinterachse eines Kraftfahrzeugs mit Vierradantrieb, **dadurch gekennzeichnet, dass** sie umfasst:

- Mittel zur Bestimmung eines Anfangssollwertes der Drehzahldifferenz ($C_{initiale}$) in Abhängigkeit von der Geschwindigkeit des Fahrzeugs,
- Mittel zur Bestimmung eines ersten Zwischensollwertes der Drehzahldifferenz ($c_{i2}$) in Abhängigkeit von der Kupplungstemperatur,
- Mittel zur Bestimmung eines zweiten Zwischensollwertes der Drehzahldifferenz ($c_{i3}$) in Abhängigkeit von dem Wenderadius des Fahrzeugs,
- Mittel zur Bestimmung eines dritten Zwischensollwertes der Drehzahldifferenz ($c_{i4}$) in Abhängigkeit von der Radiusdifferenz der Räder zwischen der Vorderachse und der Hinterachse,
- Mittel zur Modulation des Anfangssollwertes der Drehzahldifferenz ($C_{initiale}$) in Abhängigkeit von dem ersten, zweiten und dritten Zwischensollwert der Drehzahldifferenz ($c_{i2}$, $c_{i3}$, $c_{i4}$), die das Gewinnen eines Endsollwertes der Drehzahldifferenz ($C_{finale}$) ermöglichen,
- Mittel zur Messung der Drehzahl der Räder der Vorderachse und der Hinterachse und Mittel zur Bestimmung der Drehzahldifferenz der Räder der beiden Achsen,
- Mittel zum Vergleich der gemessenen Drehzahldifferenz ($\Delta V_{mes}$) mit dem Endsollwert der Drehzahldifferenz ($C_{finale}$), und
- Mittel zur Regelung der gemessenen Drehzahldifferenz ($\Delta V_{mes}$), die es ermöglichen, dass die gemessene Drehzahldifferenz ($\Delta V_{mes}$) den Endsollwert der Drehzahldifferenz ($C_{finale}$) erreicht,
- sowie Mittel für sukzessive Modulationen des Anfangssollwertes der Drehzahldifferenz ($C_{initiale}$) in Abhängigkeit von den einzelnen Zwischensollwerten der Drehzahldifferenz ($c_{i2}$, $c_{i3}$, $c_{i4}$).

4. Vorrichtung nach Anspruch 3, **dadurch gekennzeichnet, dass** sie außerdem Mittel zur Filterung des Endsollwertes der Drehzahldifferenz ($C_{finale}$) umfasst.

**Claims**

1. Method for controlling a speed difference between the speed of the wheels of a front axle and the speed of the wheels of a rear axle of a four-wheel drive motor vehicle, **characterized in that** it comprises the following steps:

- determination of an initial speed difference setpoint ($C_{initial}$) as a function of the speed of the vehicle,
- determination of a first intermediate speed difference setpoint ($c_{i2}$) as a function of the clutch temperature
- determination of a second intermediate speed difference setpoint ($c_{i3}$) as a function of the turning radius of the vehicle,
- determination of a third intermediate speed difference setpoint as a function of the difference in radius of the wheels between the front axle and the rear axle, - modulation of the initial speed difference setpoint ($C_{initial}$) as a function of said first, second and third intermediate speed difference setpoints ($c_{i2}$, $c_{i3}$, $c_{i4}$), so as to obtain a final speed difference setpoint ($C_{final}$),
- measurement of the speed of the wheels of the front axle and of the rear axle and determination of the speed difference of the wheels of the two axles,
- comparison of the measured speed difference ($\Delta V_{meas}$) with the final speed difference setpoint ($C_{final}$), and
- regulation of the measured speed difference ($\Delta V_{meas}$), in such a way that the measured speed difference ($\Delta V_{meas}$) reaches the final speed difference setpoint value ($C_{final}$),

the modulation of the initial speed difference setpoint ($C_{initial}$) being carried out by successive modulations as a function of each intermediate speed difference setpoint ($c_{i2}$, $c_{i3}$, $c_{i4}$).

2. Method according to Claim 1, **characterized in that** the final speed difference setpoint ($C_{final}$) is filtered before being compared with the measured speed difference ($\Delta V_{meas}$).

3. Device for controlling a speed difference between a front axle and a rear axle of a four-wheel drive motor vehicle, **characterized in that** it comprises:

- means for determining an initial speed difference setpoint ($C_{initial}$) as a function of the speed of the vehicle,
- means for determining a first intermediate speed difference setpoint ($c_{i2}$) as a function of the clutch temperature
- means for determining a second intermediate speed difference setpoint ($c_{i3}$) as a function of the turning radius of the vehicle,
- means for determining a third intermediate speed difference setpoint ($c_{i4}$) as a function of the difference in radius of the wheels between the front axle and the rear axle,
- means for modulating the initial speed difference setpoint ($C_{initial}$) as a function of said first, second and third intermediate speed difference setpoints ($c_{i2}$, $c_{i3}$, $c_{i4}$), allowing the obtaining of a final speed difference setpoint ($C_{final}$),
- means for measuring the speed of the wheels of the front axle and of the rear axle and means for determining the speed difference of wheels of the two axles
- means for comparing the measured speed difference ($\Delta V_{meas}$) with the final speed difference setpoint ($C_{final}$), and
- means for regulating the measured speed difference ($\Delta V_{meas}$), allowing the measured speed difference ($\Delta V_{meas}$) to reach the final speed difference setpoint value ($C_{final}$),
- as well as means for successively modulating the initial speed difference setpoint ($C_{initial}$) as a function of each intermediate speed difference setpoint ($c_{i2}$, $c_{i3}$, $c_{i4}$).

4. Device according to Claim 3, **characterized in that** it furthermore comprises means for filtering the final speed difference setpoint ($C_{final}$).

Fig. 1

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5752211 A